Europäisches Patentamt

European Patent Office

Office européen des brevets

(19)

(11) Veröffentlichungsnummer: **0 214 194 B1**

# (12) EUROPÄISCHE PATENTSCHRIFT

(45) Veröffentlichungstag der Patentschrift: **18.12.91**

(51) Int. Cl.⁵: **G11B 7/085**, G11B 7/09

(21) Anmeldenummer: **86901346.6**

(22) Anmeldetag: **21.02.86**

(86) Internationale Anmeldenummer:
**PCT/DE86/00065**

(87) Internationale Veröffentlichungsnummer:
**WO 86/05306 (12.09.86 86/20)**

Teilanmeldung 90123530.9 eingereicht am 21/02/86.

(54) **VERFAHREN UND SCHALTUNGSANORDNUNG ZUM FOKUSSIEREN EINES LICHTSTRAHLS AUF EINEN OPTISCHEN AUFZEICHNUNGSTRÄGER.**

(30) Priorität: **09.03.85 DE 3508525**

(43) Veröffentlichungstag der Anmeldung:
**18.03.87 Patentblatt 87/12**

(45) Bekanntmachung des Hinweises auf die Patenterteilung:
**18.12.91 Patentblatt 91/51**

(84) Benannte Vertragsstaaten:
**AT BE CH DE FR GB IT LI LU NL SE**

(56) Entgegenhaltungen:
**DE-A- 3 300 554
FR-A- 2 330 062
FR-A- 2 520 543**

**Patents Abstracts of Japan, Band 9, Nr. 50, (P-339)(1773), 5. März 1985**

**Patents Abstracts of Japan, Band 8, Nr. 86, (P-269)(1523), 19. April 1984**

(73) Patentinhaber: **Deutsche Thomson-Brandt GmbH
Hermann-Schwer-Strasse 3 Postfach 1307
W-7730 Villingen-Schwenningen(DE)**

(72) Erfinder: **BAAS, Dieter
Sofienstrasse 10
W-7640 Kehl(DE)**
Erfinder: **FÜLDNER, Friedrich
Wilstorfstrasse 19
W-7730 Villingen-Schwenningen(DE)**
Erfinder: **KURZ, Arthur
Terra Wohnpark 9
W-7730 VS-Marbach(DE)**

Patents Abstracts of Japan, Band 6, Nr. 41,
(P-106)(919), 13. März 1982

Patents Abstracts of Japan, Band 8, Nr. 144,
(P-284)(1581), 5. Juli 1984

Patents Abstracts of Japan, Band 7, Nr. 172,
(P-213)(1317), 29. Juli 1983

## Beschreibung

Die Erfindung betrifft ein Verfahren und eine Schaltungsanordnung zum Fokussieren eines Lichtstrahls, der mittels eines optischen Systems, bestehend aus einer Lichtquelle und einem mittels eines Stellgliedes (SG) bewegbaren Objektivs auf einen optischen Aufzeichnungsträger fokussierbar ist, der den Lichtstrahl auf eine Anzahl von Photoelementen (A, B, C, D) reflektiert, aus deren Ausgangsspannungen durch Subtraktion und Addition der so ermittelten Differenzen eine erste Steuerspannung gewonnen wird, die über einen Regelverstärker (RV) dem Stellglied (SG) zuführbar ist, so daß ein Regelkreis gebildet wird, wobei eine zweite Steuerspannung ($U_s$) von einem Signalgenerator (SR) erzeugt wird, die von dem Signalgenerator (SR) verändert wird, bis der Lichtstrahl auf den Aufzeichnungsträger fokussiert ist, worauf der zu diesem Zeitpunkt angenommene Wert W der zweiten Steuerspannung ($U_s$) gehalten und als Vorspannung dem Stellglied (SG) zugeführt wird

In der DE-OS 33 02 240 ist eine Einrichtung zum Lesen von Informationen beschrieben, die auf einem plattenförmigen Aufzeichnungsträger in spiralförmigen Spuren abgespeichert sind. Als Beispiel für eine plattenförmigen Aufzeichnungsträger sei die CD-Platte eines CD-Plattenspielers genannt. Die in den Spuren der CD-Platte abgespeicherten Informationen, z.B. Ton- oder Bildsignale, werden mittels einer optischen Abtasteinrichtung, die ein Objektiv enthält und einen Lichtstrahl zum Abtasten der Informationen auf die CD-Platte, den Aufzeichnungsträger, richtet, gelesen. Der Lichtstrahl wird von einem Laser erzeugt. Eine Fokussierungssteuereinrichtung verschiebt das Objektiv so entlang seiner optischen Achse, daß sein Brennpunkt auf den Aufzeichnungsträger zu liegen kommt. Man nennt diesen Regelvorgang, der im Prinzip der Scharfeinstellung eines Fernrohres entspricht, Fokussierung.

Der Lichtstrahl wird vom Aufzeichnungsträger auf eine Lichtstrahlempfangseinrichtung reflektiert. Damit die Informationen vom Aufzeichnungsträger einwandfrei ausgelesen werden können, ist eine dauernde Fokussierung durch die Fokussteuereinrichtung, die einen Regelkreis darstellt, nötig, denn bereits geringe Abweichungen von der Scharfeinstellung können zu Fehlern beim Lesen der Informationen führen.

Weil die Dicke der Aufzeichnungsträger von Aufzeichnungsträger zu Aufzeichnungsträger relativ stark streut, muß das Objektiv von der Fokussteuereinheit nahezu jedesmal, wenn ein anderer Aufzeichnungsträger eingelegt wird, um eine Strecke a verschoben werden, damit der Brennpunkt auf den Aufzeichnungsträger zu liegen kommt. Diese Strecke a ist jedoch wesentlich länger als die Strecken, um die das Objektiv verschoben werden muß, um den Brennpunkt auf einem eingelegten Aufzeichnungsträger zu halten, weil die Dicke eines Aufzeichnungsträgers bedeutend weniger streut als die Dicke von Aufzeichnungsträger zu Aufzeichnungsträger. In der DE-OS 33 02 240 wird auf die unterschiedlichen Dicken der Aufzeichnungsträger und den dadurch verursachten größeren Regelzeiten sowie der dadurch bedingten ungenaueren Fokussierung nicht eingegangen.

Die Lichtstrahlempfangseinrichtung besteht, wie in den Figuren 4a, 4B, 4C und 4D der genannten DE-OS gezeigt ist, aus vier Photodioden 14a, 14b, 14c und 14d, die in einem Quadrat so angeordnet sind, daß sie das Quadrat in vier gleich große Quadrate aufteilen. Die Ausgangsspannungen der vier Photodioden 14a, 14b, 14c und 14d werden einer Betriebsschaltung zugeführt, in der die beiden Summen der Ausgangsspannungen zweier jeweils diagonal gegenüberliegenden Photodioden gebildet werden. Das aus der Differenz dieser beiden Summen gewonnene Fokussierungsfehlersignal SF wird der Fokussierungssteuereinrichtung zugeführt, die das Objektiv entlang seiner optischen Achse so lange bewegt, bis der Lichtstrahl auf den Aufzeichnungsträger fokussiert ist.

Unter der Annahme, daß ideale, vollkommen gleiche Photodioden verwendet werden, wird das Fokussierungsfehlersignal null, wenn der Lichtstrahl genau auf den Aufzeichnungsträger fokussiert ist. In diesem Fall bildet sich der reflektierte Lichtstrahl auf den vier Photodioden, wie in der Figur 4B der genannten DE-OS dargestellt ist, als Kreis ab, so daß jede Photodiode mit der gleichen Lichtenergie bestrahlt wird. Weil jede Photodiode deshalb die gleiche Ausgangsspannung liefert, wird das Fokussierungsfehlersignal zu null. Wenn dagegen das Objektiv zu nahe am Aufzeichnungsträger oder zu weit von ihm entfernt ist, bildet sich der reflektierte Lichtstrahl auf den vier Photodioden nicht als Kreis, sondern wegen der astigmatischen Linse des Objektivs als Ellipse ab. Weil in diesem Fall der Defokussierung die Photodioden wegen der auf sie strahlenden unterschiedlichen Lichtenergien unterschiedliche Ausgangsspannungen liefern, ist das Fokussierungsfehlersignal SF von null verschieden. Es bewirkt deshalb solange eine Verschiebung des Objektivs, bis es zu null wird, d.h. bis der Brennpunkt auf dem Aufzeichnungsträger liegt.

Weil reale Photodioden in ihren Werten stets streuen, wird das Fokussierungsfehlersignal jedoch nicht genau zu null, wenn auf jede Photodiode die gleiche Lichtenergie einfällt. Vielmehr wird es einen von Null verschiedenen Wert annehmen. Den Wert Null nimmt das Fokussierungsfehlersignal je nach Streuung der Parameter der Photodioden bei mehr oder weniger stark unterschiedlichen auf die einzelnen Photodioden einfallenden Lichtenergien an.

Weil die Fokussteuereinrichtung jedoch den Wert Null des Fokussierungsfehlersignals als korrekten Wert interpretiert, wird der Brennpunkt des Objektivs entweder vor oder hinter dem Aufzeichnungsträger liegen. Eine präzise Fokussierung ist deshalb bei der Einrichtung aus der DE-OS 33 02 240 nicht immer möglich.

Außerdem arbeitet der Regelverstärker nicht symmetrisch, sondern unsymmetrisch in seinem Regelbereich. Die Abweichung von einer genauen Fokussierung hängt von der Streuung der Diodenparameter ab. Wenn z.B. die Einrichtung aus der genannten DE-OS in CD-Plattenspieler eingebaut wird, streut auch die Abweichung von Gerät zu Gerät, denn es ist unmöglich, in alle CD-Plattenspieler genau gleiche Photodioden einzubauen. Das wiederum führt zu Geräten unterschiedlicher Qualität.

In Hitachi Service Manual, TyNo 348E, DA-1000, December 1982 ist auf Seite 22 in Fig. 30 ein Regelkreis zum Fokussieren des Lichtstrahls bei einem CD-Plattenspieler gezeigt. Die Off-Set-Spannung des Regelverstärkers IC 100 und der Lichtempfangs- und Auswerteschaltung werden durch manuelles Einstellen des Potentiometers R 102 kompensiert. Ändern sich die Offsetspannungen infolge Temperaturschwankungen oder Alterung der Bauteile, so kann die Qualität des CD-Plattenspielers spürbar nachlassen. Um wieder eine einwandfreie Wiedergabe des Tons zu erzielen, ist ein erneuter Abgleich des Regelverstärkers IC 100 durch Verstellen des Potentiometers R 102 in der Werkstatt nötig. Derartige Wartungsmaßnahmen sind für Kunden nicht nur unangenehm, sie kosten auch Geld.

Aus der JP-A 59-188845 ist eine optische Abtastvorrichtung mit einem Fokusregelkreis bekannt, bei der eine erste Steuerspannung für den Fokusregelkreis erzeugt wird. Eine zweite treppenförmige Steuerspannung wird mittels eines Taktgenerators, eines Zählers und eines Digital-Analog-Wandlers erzeugt und einem Speicher sowie über einen steuerbaren Schalter einem Fokusfehlerdetektor zugeführt, dessen Ausgang mit dem Stellglied des Fokusregelkreises verbunden ist. Das optisch abgetastete Datensignal wird in ein elektrisches NF-Signal umgewandelt, das als Tonsignal bezeichnet wird. Wenn das Tonsignal einen Spitzenwert erreicht, wird der Wert der treppenförmigen zweiten Steuerspannung im Speicher gespeichert. Gleichzeitig wird der Ausgang des Digital-Analog-Wandlers vom Fokusfehlerdetektor durch öffnen eines ersten Schalters getrennt, während gleichzeitig durch Schließen eines zweiten Schalters der Ausgang des Speichers mit dem Fokusfehlerdetektor verbunden wird. Die im Speicher gespeicherte zweite Steuerspannung liegt nun ständig als Kompensationsspannung am Fokusfehlerdetektor.

Ein Nachteil dieser Anordnung besteht jedoch darin, daß zur Kompensation der Offsetspannung das Tonsignal benötigt wird. Es kann daher erst kompensiert und fokussiert werden, wenn der Lichtstrahl eine Datenspur auf dem Aufzeichnungsträger abtastet. Trifft der Lichtstrahl dagegen auf einen Bereich des Aufzeichnungsträgers, wo keine Daten lesbar sind, so ist weder eine Kompensation noch eine Fokussierung des Lichtstrahls möglich. Das kann z.B. der Fall sein, wenn der Lichtstrahl zwischen zwei Datenspuren fällt, wenn der Aufzeichnungsträger fehlerhaft, beschädigt oder verschmutzt ist. An den fehlerhaften, beschädigten oder verschmutzten Stellen ist weder die Kompensation des Offsets noch die Fokussierung möglich. Erst wenn der Lichtstrahl Daten abtastet und dadurch ein Tonsignal erzeugt wird, kann mit der Kompensation und der Fokussierung begonnen werden. Es kann deshalb unter ungünstigen Umständen länger dauern, bis der Lichtstrahl genau auf den Aufzeichnungsträger fokussiert ist.

Weil, wie bereits erwähnt, die Dicke der Aufzeichnungsträger verhältnismäßig stark streut, wird die Fokussierung erschwert.

Es ist daher Aufgabe der Erfindung, ein Verfahren zum Fokussieren eines Lichtstrahls auf einen optischen Aufzeichnungsträger an die unterschiedlichen Dicken der Aufzeichnungsträger anzupassen.

Die Erfindung löst diese Aufgabe dadurch, daß die Veränderung der zweiten Steuerspannung ($U_s$) bei offenem Regelkreis erfolgt, daß der Wert W der zweiten Steuerspannung ($U_s$) für verschiedene Typen von Aufzeichnungsträgern speicherbar ist und daß beim Fokussieren bei einem bestimmten Typ eines Aufzeichnungsträgers die zweite Steuerspannung vom für diesen Typ gespeicherten Wert W ausgehend verändert wird.

Beim Fokussieren wird deshalb bei einem bestimmten Typ eines Aufzeichnungsträgers die zweite Steuerspannung vom für diesen Typ gespeicherten charakteristischen Wert ausgehend verändert. Diese Maßnahme bewirkt, daß schneller fokussiert wird als beim Stand der Technik, weil das Objektiv bereits zu Beginn des Fokussierens in der Nähe der richtigen Lage steht.

Es zeigen

die Figur 1 eine Schaltungsanordnungen gemäß Anspruch 10

die Figur 2 eine Schaltungsanordnungen gemäß Anspruch 11

die Figur 3 eine Schaltungsanordnungen gemäß Anspruch 12

die Figur 4 eine Schaltungsanordnungen gemäß Anspruch 13

die Figur 5 eine Schaltungsanordnungen gemäß Anspruch 14

die Figur 6 eine Schaltungsanordnungen gemäß Anspruch 15
die Figuren 7, 8, 9, 10, 11, 12 und 13 Spannungsdiagramme sowie
die Figur 14 und die Figur 15 sogenannte Aktuatoren mit Objektiv und Spule.

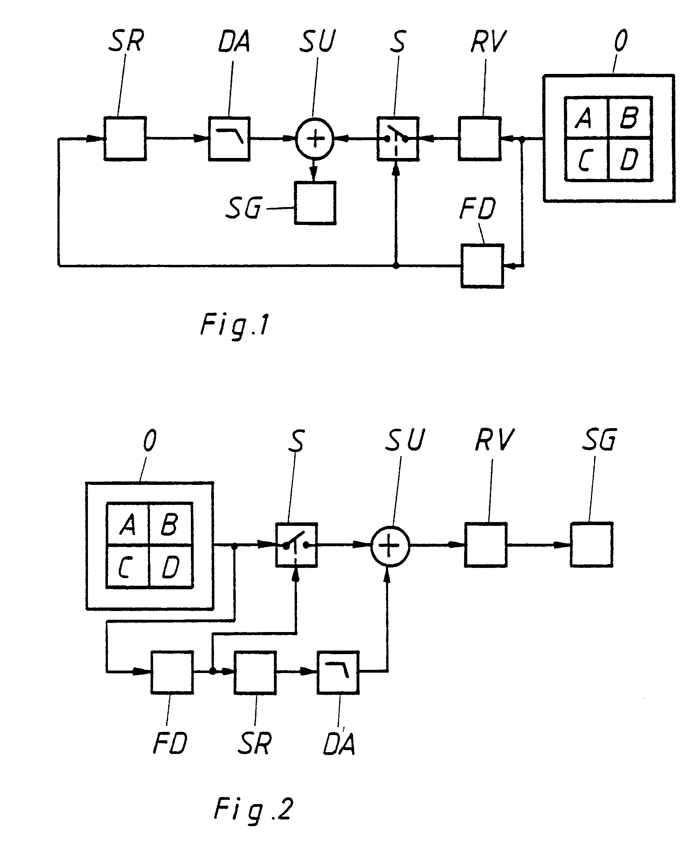

Anhand der in Figur 1 gezeigten und im Anspruch 10 angegebenen Schaltungsanordnung wird das erfindungsgemäße Verfahren erläutert.

In Figur 1 ist der Ausgang einer Lichtempfangs- und Auswerteschaltung O, die vier Photodioden A, B, C und D enthält, mit dem Eingang des Regelverstärkers RV und dem Eingang eines Fokusdetektors FD verbunden. Der Ausgang des Fokusdetektors FD ist mit dem Steuereingang eines steuerbaren Schalters S und dem Eingang eines Signalgenerators SR verbunden, dessen Ausgang mit dem Eingang eines Digital-Analog-Wandlers DA verbunden ist. Der Ausgang des Digital-Analog-Wandlers DA ist mit dem einen Eingang einer Summationsstelle SU verbunden, deren anderer Eingang mit dem einen Kontakt des steuerbaren Schalters S verbunden ist. Der andere Kontakt des steuerbaren Schalters S ist mit dem Ausgang des Regelverstärkers RV verbunden. Der Ausgang der Summationsstelle SU ist mit dem Eingang des Stellgliedes SG verbunden.

Die Lichtempfangs- und Auswerteschaltung O kann z.B. so aufgebaut sein, wie es in der DE-OS 33 02 240 beschrieben ist. Sie ist mit vier Photodioden A, B, C und D ausgestattet. Die Spannung $U_{FE}$ am Ausgang der Lichtempfangs- und Auswerteschaltung O, die dem Fokussierungsfehlersignal SF entspricht, wird nach folgender Formel gebildet:

$$U_{FE} = (A-D) + (B-C)$$

Unter der Voraussetzung, daß die vier Photodioden A, B, C und D ideale Bauteile sind, wird die Spannung $U_{FE}$ zu null, wenn der Brennpunkt auf dem Aufzeichnungsträger liegt. Zu Beginn des Fokussierens bewirkt der Fokusdetektor FD, daß der steuerbare Schalter S und damit der Regelkreis geöffnet wird, sowie daß der Signalgenerator SR an seinem Ausgang eine pulsbreitenmodulierte Spannung $U_{PWM}$ abgibt, deren Pulsbreite periodisch geändert wird. Der Digital-Analog-Wandler DA, der z.B. als Integrator ausgeführt sein kann, gibt deshalb je nach Aufbau an seinem Ausgang eine sägezahn- oder dreieckförmige Spannung $U_s$ an das Stellglied SG ab.

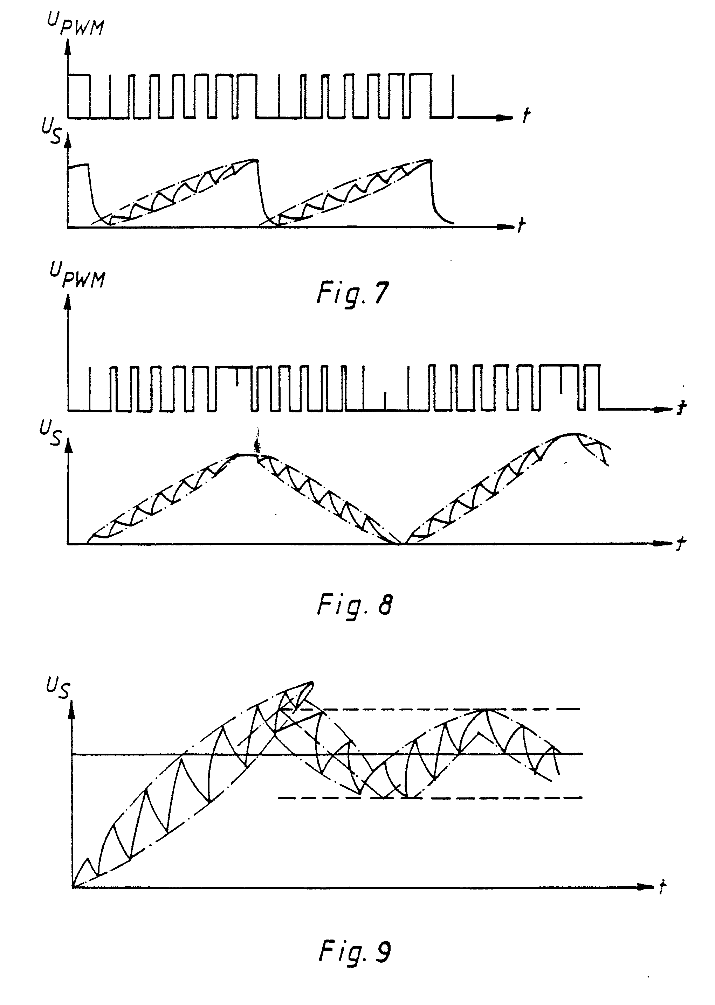

In Figur 7 sind die pulsbreitenmodulierte Spannung $U_{PWM}$ und die sägezahnförmige Spannung $U_s$ gezeigt. In Figur 8 sind die pulsbreitenmodulierte Spannung $U_{PWM}$ und die dreieckförmige Spannung $U_s$ gezeigt.

Wegen der sägezahn- oder dreieckförmigen Spannung $U_s$ bewegt das Stellglied SG so lange das Objektiv, bis der Brennpunkt auf den Aufzeichnungsträger zu liegen kommt. Zu diesem Zeitpunkt bewirkt der Fokusdetektor FD, daß der steuerbare Schalter S geschlossen wird, daß der Signalgenerator SR die Pulsbreite seiner Ausgangsspannung nicht mehr ändert und daß die gerade zu diesem Zeitpunkt am Ausgang des Digital-Analog-Wandlers AD liegende Spannung gehalten und ständig über die Summationsstelle SU dem Stellglied SG zugeführt wird. Der Brennpunkt liegt jetzt auf dem Aufzeichnungsträger. Weil der Regelkreis geschlossen ist, wird das Objektiv nun so vom Stellglied SG zugeführt, daß der Brennpunkt ständig auf dem Aufzeichnungsträger liegen bleibt. Auf diese Weise werden Unebenheiten des Aufzeichnungsträgers ausgeregelt.

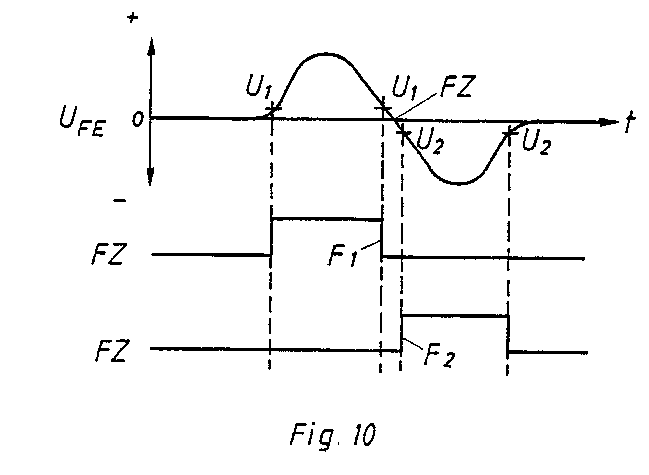

In Figur 10 ist der Verlauf der Spannung $U_{FE}$ am Ausgang der Lichtempfangs- und Auswerteschaltung O und das Signal FZ am Ausgang des Fokusdetektors FD gezeigt, wenn das Objektiv vom größten möglichen Abstand zum Aufzeichnungsträger ausgehend auf ihn zu bewegt wird bis zum kleinsten möglichen Abstand. Wenn die Kurve die Abszisse schneidet, liegt der Brennpunkt auf dem Aufzeichnungsträger. Der steuerbare Schalter S wird je nach der Bewegungsrichtung des Objektivs von der fallenden Flanke F1 oder F2 des Signals FZ geschlossen: War das Objektiv zu weit vom Aufzeichnungsträger entfernt und wurde es deshalb auf ihn zu bewegt, so wird der steuerbare Schalter S von der Flanke F1 geschlossen, während er von der Flanke F2 geschlossen wird, wenn das Objektiv, weil es zu nahe am Aufzeichnungsträger war, in entgegengesetzter Richtung von ihm weg bewegt wurde.

Weil zunächst der Regelkreis geöffnet und die zweite Steuerspannung z.B. in Sägezahn- oder Dreieckform an das Stellglied SG angelegt wird, erfolgt das Fokussieren verhältnismäßig schnell. Es wird aber auch genau fokussiert, weil der Wert, den die zweite Steuerspannung annimmt, wenn der Brennpunkt auf dem Aufzeichnungsträger liegt, gehalten und ständig am Stellglied SG des nun geschlossenen Regelkreises als Vorspannung anliegt. Dadurch wird die Stabilität des Regelkreises erhöht, während gleichzeitig Unsymmetrien des Regelkreises weitgehend verhindert werden.

Figur 7 und Figur 8 zeigen die sägezahn- und die dreieckförmige Steuerspannung $U_s$. Bei der in Figur 7 gezeigten sägezahnförmigen Steuerspannung $U_s$ wird das Objektiv bei offenem Regelkreis angehoben, bis der Brennpunkt auf dem Aufzeichnungsträger liegt. Ist die Einstellung beim ersten Mal nicht zu erreichen, fällt das Objektiv in seine Ausgangsstellung zurück und der Einstellvorgang beginnt von vorne.

Bei der in Figur 8 gezeigten dreieckförmigen Steuerspannung $U_s$ wird im Falle eines Fehlversuchs das Objektiv langsam abgesenkt, und auf der negativen Flanke der dreieckförmigen Steuerspannung $U_s$ wird erneut versucht, den Lichtstrahl auf den Aufzeichnungsträger zu fokussieren. Dadurch wird verhindert, daß das Objektiv wie bei der sägezahnförmigen Steuerspannung $U_s$ zuerst in die Ausgangslage zurückfallen muß. Durch die definierte Abwärtsbewegung des Objektives wird ein schnelleres Fokussieren erzielt.

Figur 9 zeigt eine Steuerspannung $U_s$ bei offenem Regelkreis mit einem eingeschränkten Suchbereich. Zu Beginn des ersten Fokussierversuchs wird das Objektiv aus seiner Ausgangslage zum Aufzeichnungsträger hin bewegt. Liegt der Brennpunkt auf dem Aufzeichnungsträger, wird das für diese Lage des Objektivs bestimmte Pulsbreitenverhältnis gespeichert. Im Falle, daß das Objektiv z.B. durch mechanische Erschütterung seinen Fokushaltebereich überschreitet, wird von diesem bekannten Pulsbreitenwert ausgehend ein neuer Fokussierversuch mit eingeschränktem Suchbereich eingeleitet. Durch diese Maßnahme kommt der Brennpunkt in kürzerer Zeit auf den Aufzeichnungsträger zu liegen, als wenn der Fokussierversuch von der Ausgangsstellung des Objektivs aus gestartet würde. Gleiches gilt auch, falls ein erstmaliger Fokussierversuch bzw. das Einkoppeln mißlingt.

Weil sich das Objektiv zu Beginn eines Fokussierversuchs bereits in der Nähe seiner richtigen Lage befindet, sind die Beschleunigungsenergie, um das Objektiv in die richtige Lage zu bewegen, und damit auch die Bremsenergie, um es dort anzuhalten, gering. Auf diese Weise wird ein schneller und sicherer Übergang vom Suchvorgang in den Regelzustand erreicht.

Es wird nun die in der Figur 2 abgebildete und im Anspruch 11 angegebene Schaltungsanordnung beschrieben und erläutert.

Bei der Schaltungsanordnung in Figur 2 ist der Ausgang der Lichtempfangs- und Auswerteschaltung O mit dem Eingang des Fokusdetektors FD und mit dem einen Kontakt des steuerbaren Schalters S verbunden, dessen anderer Kontakt mit dem einen Eingang der Summationsstelle SU verbunden ist, während der andere Eingang mit dem Ausgang des Analog-Digital-Wandlers AD verbunden ist. Der Ausgang des Fokusdetektors FD ist mit dem Steuereingang des steuerbaren Schalters S und mit dem Eingang des Signalgenerators SG verbunden, dessen Ausgang mit dem Eingang des Analog-Digital-Wandlers AD verbunden ist. Der Ausgang der Summationsstelle SU ist mit dem Eingang des Regelverstärkers RV verbunden, dessen Ausgang mit dem Eingang des Stellgliedes SG verbunden ist.

Die zweite Schaltungsanordnung aus Figur 2 funktioniert auf die gleiche Weise wie die erste Schaltungsanordnung aus Figur 1. Im Gegensatz zur ersten Schaltungsanordnung liegt bei der zweiten Schaltungsanordnung die Reihenschaltung aus dem steuerbaren Schalter S und der Summationsstelle SU vor dem Regelverstärker RV. Das Einspeisen der Ausgangsspannung des Analog-Digital-Wandlers AD vor dem Regelverstärker RV bringt den Vorteil, daß bei jedem Fokussieren automatisch die Offsetspannung des Regelverstärkers RV und der Lichtempfangs- und Auswerteschaltung O kompensiert wird. Dadurch wird die Fokussierung genauer.

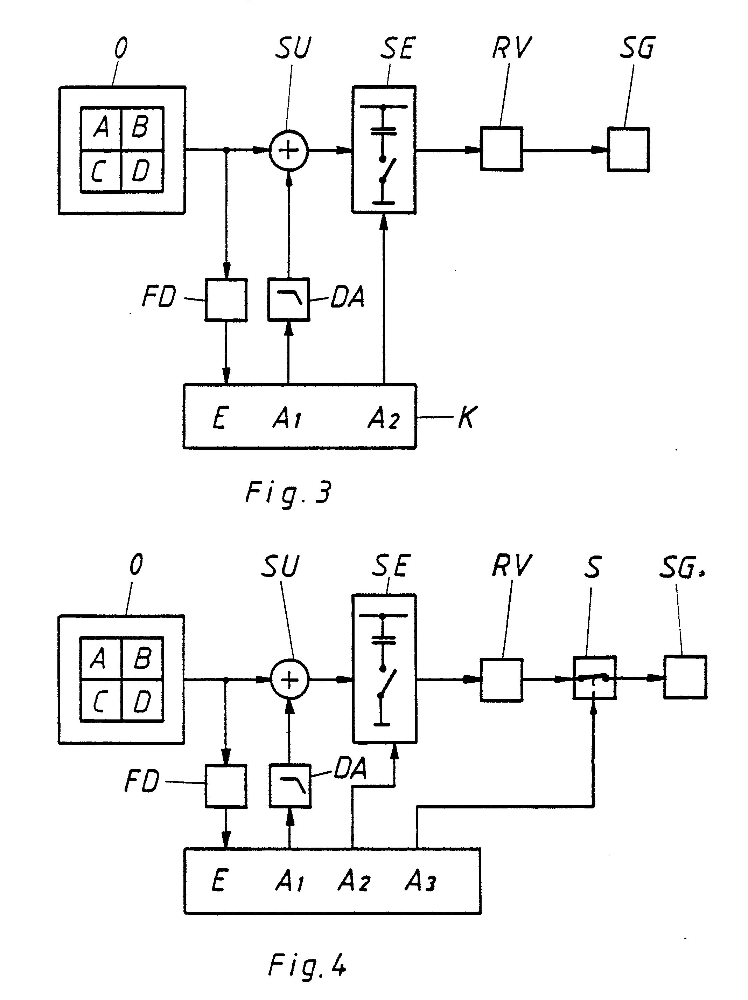

In Figur 3 ist eine dritte Schaltungsanordnung gezeigt, die im Anspruch 12 beschrieben ist.

Der Ausgang der Lichtempfangs- und Auswerteschaltung O ist mit dem Eingang des Fokusdetektors FD und mit dem einen Eingang der Summationsstelle SU verbunden, deren anderer Eingang mit dem Ausgang eines Digital-Analog-Wandlers DA verbunden ist. Der Ausgang der Summationsstelle SU ist mit dem Eingang einer Schalteinrichtung SE verbunden, deren Ausgang mit dem Eingang des Regelverstärkers RV verbunden ist. Der Ausgang des Regelverstärkers RV ist mit dem Eingang des Stellgliedes SG verbunden. Der Eingang E einer Kontrolleinheit K ist mit dem Ausgang des Fokusdetektors FD verbunden, ein erster Ausgang A1 der Kontrolleinheit K ist mit dem Eingang des Digital-Analog-Wandlers DA verbunden, während ein zweiter Ausgang A2 der Kontrolleinheit K mit dem Steuereingang der Schalteinheit SE verbunden ist.

Zu Beginn des Fokussierens gibt die Kontrolleinheit K ein Signal an ihrem zweiten Ausgang A2 an die Schalteinheit SE ab, die darauf den Ausgang der Summationsstelle SU vom Eingang des Regelverstärkers RV wechselspannungsmäßig trennt, indem sie diese bei den Anschlüsse wechselspannungsmäßig auf Bezugspotential legt, während der Ausgang der Summationsstelle SU und der Eingang des Regelverstärkers RV gleichspannungsmäßig weiterhin miteinander verbunden bleiben. Die Kontrolleinheit K ändert nun das Signal an ihrem ersten Ausgang A1 so, daß die Spannung am Ausgang des Digital-Analog-Wandlers DA linear ansteigt. Weil diese linear ansteigende Spannung über den Regelverstärker RV dem Stellglied SG zugeführt wird, wird das Objektiv bewegt. Wenn der Brennpunkt auf dem Aufzeichnungsträger liegt, gibt der Fokusdetektor FD ein Signal an die Kontrolleinheit K ab, die darauf die zu diesem Zeitpunkt an ihrem ersten Ausgang A1 liegende Spannung hält und ein Signal an ihrem zweiten Ausgang A2 an die Schalteinheit SE abgibt, die den Ausgang der Summationsstelle SU wieder wechselspannungsmäßig mit dem Eingang des Regelverstärkers RV verbindet. Weil deshalb der Regelkreis wieder vollständig geschlossen ist, wird das Objektiv dem Stellglied SG so geführt, daß der Brennpunkt stets auf dem Aufzeichnungsträger liegen bleibt.

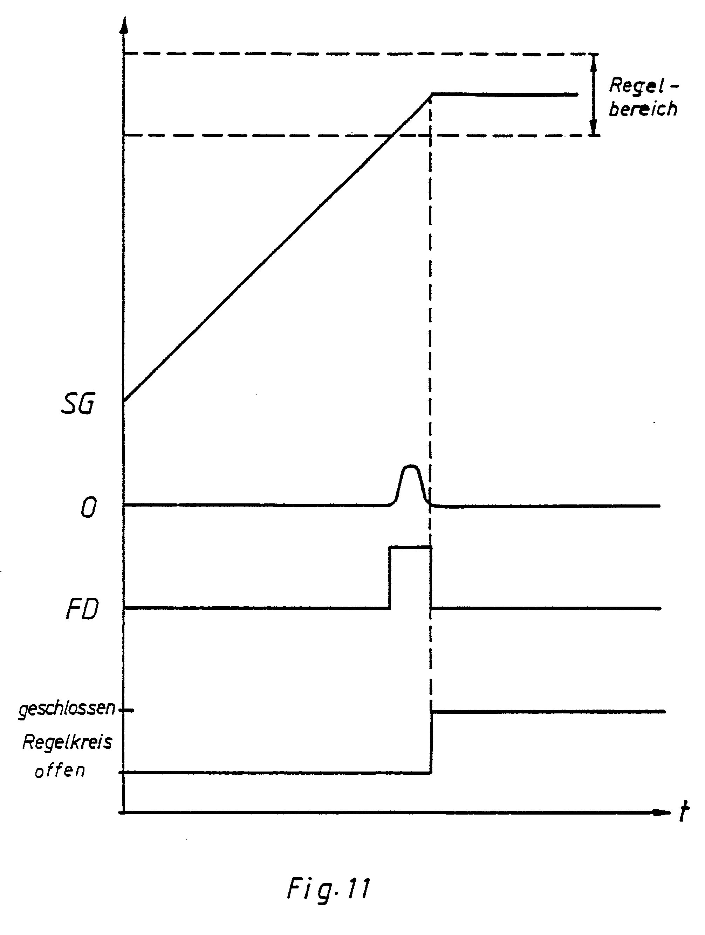

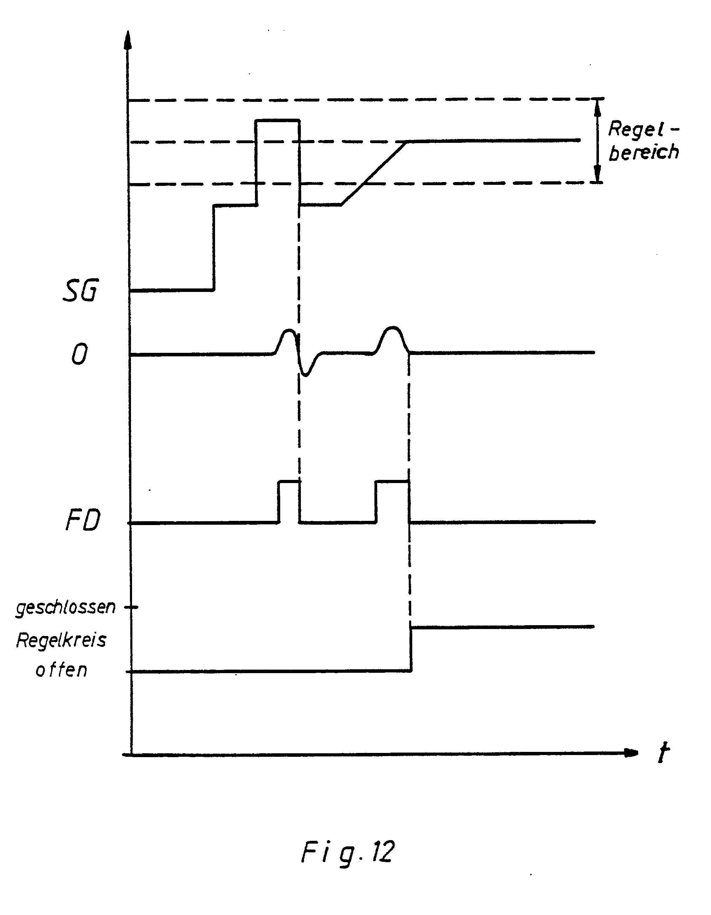

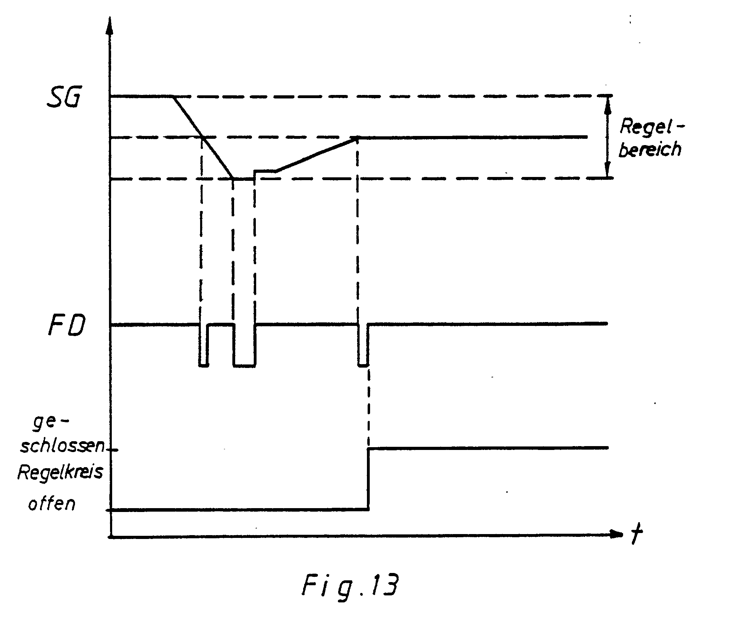

In Figur 11 und 12 sind die Spannungen am Eingang des Stellgliedes SG, am Ausgang der Lichtempfangs- und Auswerteschaltung O und am Ausgang des Fokusdetektors FD sowie der Zustand des Regelkreises - offen oder geschlossen - über der Zeit aufgetragen.

Wie in Figur 12 dargestellt ist, kann die Spannung am Eingang des Stellgliedes SG zunächst anstelle linear treppenförmig in Schritten erhöht werden, bis der Fokusdetektor FD zum ersten Mal ein Signal an die Kontrolleinheit K abgibt. Das ist der Fall, wenn der Brennpunkt zum ersten Mal auf den Aufzeichnungsträger zu liegen kommt. Dieses erste Signal des Fokusdetektors FD bewirkt, daß die Spannung am Eingang des Stellgliedes SG um den letzten Schritt erniedrigt wird, um dann linear anzusteigen, bis der Fokusdetektor FD ein zweites Mal ein Signal an die Kontrolleinheit K abgibt. Das ist der Fall, wenn der Brennpunkt wieder auf dem Aufzeichnungsträger liegt. Das zweite Signal am Ausgang des Fokusdetektors FD bewirkt, daß der Regelkreis von der Kontrolleinheit K geschlossen wird. Durch den treppenförmigen Anstieg der Spannung am Eingang des Stellgliedes SG wird schneller als bei linearem Anstieg fokussiert.

Weil die Schwankungen der Offsetspannungen, deren Wert man im voraus nicht kennt, wesentlich größer sind als die Steuerspannung, die nötig ist, um das Objektiv in die Lage zu bringen, bei der der Brennpunkt auf dem Aufzeichnungsträger liegt, ist es sinnvoll, die Kompensation anstatt mit null Volt mit einer betragmäßig maximalen Kompensationsspannung zu beginnen.

Auch die dritte Schaltungsanordnung hat den Vorteil, daß gleichzeitig mit dem Fokussieren die Offsetspannung des Regelverstärkers RV und der Lichtempfangs- und Auswerteschaltung O kompensiert werden. Ein weiterer Vorteil ist darin zu sehen, daß bei gleichspannungsmäßig geschlossenem Regelkreis fokussiert wird, weil dadurch unterschiedliche Dicken verschiedener Aufzeichnungsträger mit berücksichtigt werden. Jedoch hat die dritte Schaltungsanordnung den Nachteil, daß bei nicht in das Gerät eingelegtem Aufzeichnungsträger eine grobe Fokussierung kritisch ist, weil mit einer Übersteuerung des Regelverstärkers RV und somit auch des Stellgliedes SG zu rechnen ist.

Dieser Nachteil läßt sich bei der vierten Schaltungsanordnung, die in Figur 4 gezeigt und im Anspruch 13 beschrieben ist, dadurch beheben, daß zusätzlich zu der Schalteinheit SE ein steuerbarer Schalter S nach dem Regelverstärker RV vorgesehen ist, dessen Steuereingang mit einem dritten Ausgang A3 der Kontrolleinheit K verbunden ist.

Der steuerbare Schalter S bleibt bei störungsfreiem Betrieb geschlossen. Erst wenn aus irgend welchen Gründen die Fokussierung nicht gelingt, wird der steuerbare Schalter S von der Kontrolleinheit K geöffnet, damit das Stellglied SG nicht übersteuert wird. Der steuerbare Schalter S hat deshalb lediglich eine Schutzfunktion.

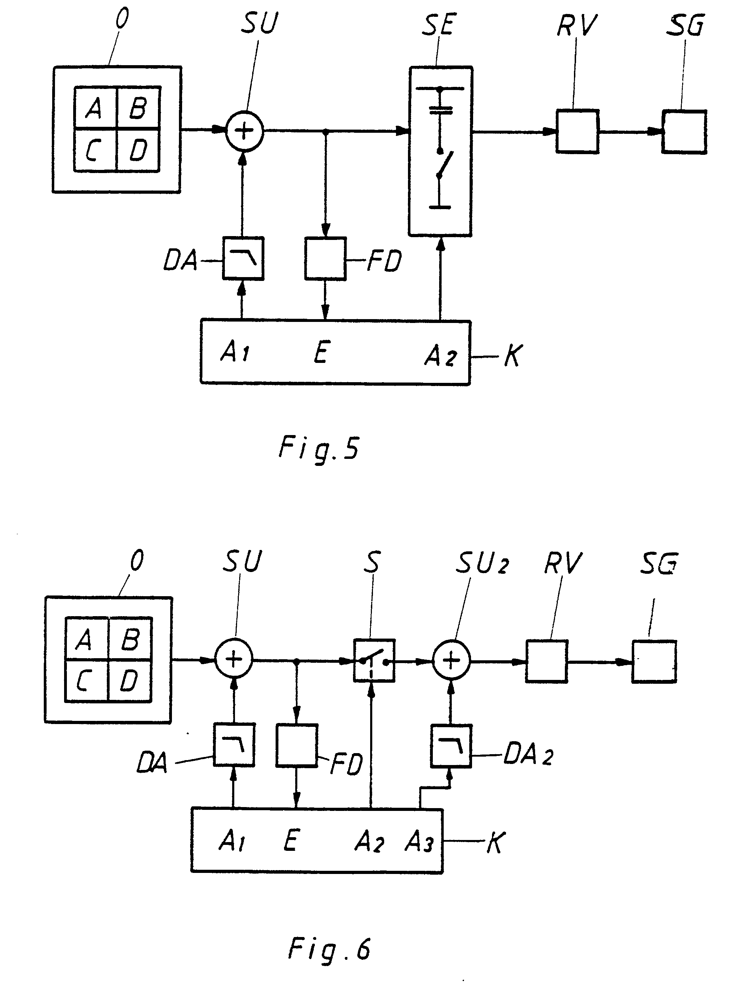

Figur 5 zeigt und Anspruch 14 beschreibt eine fünfte Schaltungsanordnung, die sich von der dritten Schaltungsanordnung aus Figur 3 nur dadurch unterscheidet, daß der Eingang des Fokusdetektors FD nicht mit dem einen Eingang, sondern mit dem Ausgang der Summationsstelle SU verbunden ist.

Durch die Maßnahme, den Fokusdetektor FD nach der Summationsstelle SU vorzusehen, wird die Offsetspannung der Lichtempfangs- und Auswerteschaltung O, die durch unterschiedliche Parameter der vier Photodioden A, B, C und D verursacht wird, getrennt von der Offsetspannung des Regelverstärkers RV erfasst und kompensiert.

Die Kompensation wird dadurch ermöglicht, daß bei nicht eingelegtem Aufzeichnungsträger alle vier Photodioden A, B, C und D der Lichtempfangs- und Auswerteschaltung O unabhängig von der Lage des Objektivs kein Licht aus der Lichtquelle des optischen Systems empfangen. Weil die vier Photodioden deshalb im Dunkeln liegen, geben sie lediglich die sogenannten Dunkelströme ab, die, wie in der Einleitung bereits erklärt wurde, streuen.

Der Fokusdetektor FD gibt ein erstes Signal an die Kontrolleinheit K ab, wenn die Spannung am Ausgang der Summationsstelle SU null wird. Das ist aber gerade dann der Fall, wenn die Offsetspannung der Lichtempfangs- und Auswerteschaltung O, verursacht durch die unterschiedlichen Dunkelströme der vier Photodioden, durch die Spannung am Ausgang des Digital-Analog-Wandlers DA kompensiert wird. Diese Kompensationsspannung wird gehalten.

Nach Einlegen des Aufzeichnungsträgers gibt die Kontrolleinheit K eine veränderbare Spannung an ihrem ersten Ausgang A1 ab, die der Kompensationsspannung überlagert wird. Dadurch wird das Objektiv vom Stellglied SG so lange bewegt, bis der Fokusdetektor FD feststellt, daß der Brennpunkt auf dem Aufzeichnungsträger liegt, und ein Signal an die Kontrolleinheit K abgibt, die darauf die zu diesem Zeitpunkt an ihrem ersten Ausgang A1 abgegebene Spannung hält. Zusätzlich bewirkt die Kontrolleinheit K, daß die Schalteinheit SE den Regelverstärker RV und die Summationsstelle SU wieder wechselspannungsmäßig miteinander verbindet. Weil der Regelkreis nun vollständig geschlossen ist, wird das Objektiv so geführt, daß der Brennpunkt auf dem Aufzeichnungsträger liegen bleibt.

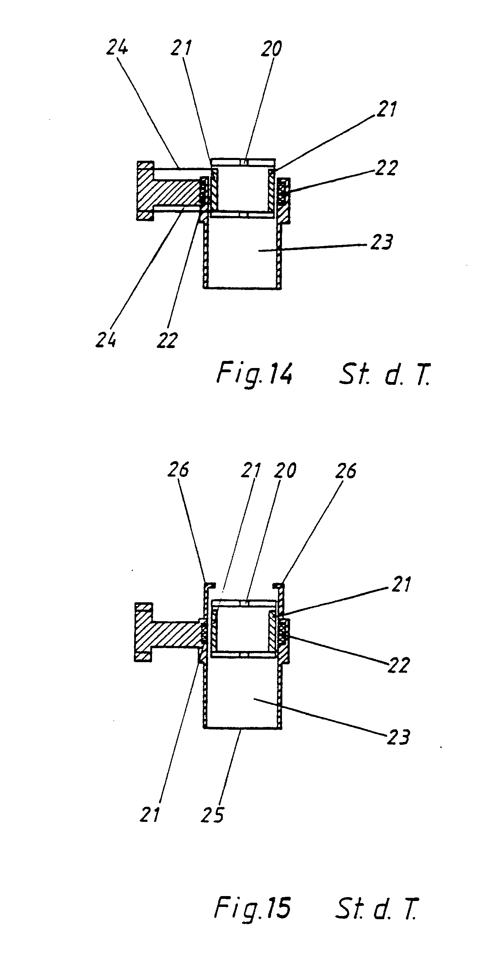

In Figur 13 sind die Spannungen am Ausgang des Stellgliedes SG und am Ausgang des Fokusdetektors FD sowie der Zustand des Regelkreises - offen oder geschlossen - über der Zeit aufgetragen.

Eine im Anspruch 15 angegebene Ausgestaltung der fünften Schaltungsanordnung aus Figur 5 zeigt die Figur 6.

Sie unterscheidet sich von der fünften Schaltungsanordnung dadurch, daß eine zweite Summationsstelle SU2, ein zweiter Digital-Analog-Wandler DA2 und anstelle der Schalteinheit SE ein steuerbarer Schalter S vorgesehen sind, dessen einer Kontakt mit dem Ausgang der ersten Summationsstelle SU und mit dem Eingang des Fokusdetektors FD verbunden ist, während dessen anderer Kontakt mit dem einen Eingang der zweiten Summationsstelle SU2 verbunden ist. Der Steuereingang des steuerbaren Schalters S ist mit dem zweiten Ausgang A2 der Kontrolleinheit K verbunden, deren dritter Ausgang A3 mit dem Eingang des zweiten Digital-Analog-Wandlers DA2 verbunden ist. Der Ausgang des zweiten Digital-Analog-Wandlers DA2 ist mit dem anderen Eingang der zweiten Summationsstelle SU2 verbunden, deren Ausgang mit dem Eingang des Regelverstärkers RV verbunden ist. Der Ausgang des Regelverstärkers RV ist mit dem Eingang des Stellgliedes SG verbunden.

Zunächst werden wie bei der vorherigen Schaltungsanordnung die Offsetspannungen der Lichtempfangs- und Auswerteschaltung O und des Regelverstärkers RV kompensiert. Hierzu wird der steuerbare Schalter S geöffnet. Die Kontrolleinheit K ändert die Spannung an ihrem ersten Ausgang A1 so lange, bis die Spannung am Ausgang der Summationsstelle SU null wird, weil der Fokusdetektor FD zu diesem Zeitpunkt ein Signal an die Kontrolleinheit K abgibt. Die zu diesem Zeitpunkt am Ausgang der Kontrolleinheit K liegende Spannung wird gehalten. Die Kontrolleinheit K gibt nun bei weiterhin geöffnetem steuerbaren Schalter S eine veränderbare Spannung an ihrem dritten Ausgang A3 ab, die über den weiteren Digital-Analog-Wandler DA2 dem Stellglied SG zugeführt wird, das das Objektiv nun bewegt. Wenn der Brennpunkt durch die Bewegung des Objektivs in die Nähe des Aufzeichnungsträgers kommt, steigt oder fällt, je nach der Bewegungsrichtung des Objektivs, die Spannung am Ausgang der Summationsstelle SU, um wieder den Wert Null anzunehmen, wenn der Brennpunkt auf dem Aufzeichnungsträger liegt.

Dieser Spannungsverlauf ist in Figur 10 dargestellt. Der Fokusdetektor FD gibt dann ein zweites Mal ein Signal an die Kontrolleinheit K ab. Dieses Signal bewirkt, daß die Spannung am dritten Ausgang A3 der Kontrolleinheit K gehalten und daß der steuerbare Schalter S geschlossen wird. Weil der Regelkreis jetzt geschlossen ist, wird das Objektiv vom Stellglied SG so geführt, daß der Brennpunkt auf dem Aufzeichnungsträger bleibt.

Alle beschriebenen Schaltungsanordnungen außer der ersten weisen den Vorteil auf, daß bei jedem Fokussierversuch und damit jedesmal beim Wiedereinschalten des Gerätes die Offsetspannung des Regelverstärkers RV kompensiert wird. Bei der dritten, vierten, fünften und sechsten, Schaltungsanordnung, die in den Figuren 3, 4, 5 und 6 gezeigt sind, wird außer der Offsetspannung des Regelverstärkers RV auch die der Lichtempfangs- und Auswerteschaltung O kompensiert.

Bei der Herstellung von CD-Plattenspielern, die mit einer der in den Figuren 3, 4, 5 oder 6 gezeigten Schaltungsanordnungen ausgerüstet sind, ist kein Abgleich der Regelverstärker an einem Potentiometer von Hand nötig, wie es bei der Schaltungsanordnung aus Figur 30 auf Seite 22 des Hitachi Service Manuals noch der Fall ist. Weil jedesmal, wenn das Gerät eingeschaltet wird, die Offsetspannungen von neuem kompensiert werden, wirken sich langfristige Driften der Offsetspannungen infolge Alterung der Bauteile nicht aus. Es kann deshalb nicht der Fall eintreten, daß der Regelverstärker des Fokusregelkreises bei einem CD-Plattenspieler, der zunächst einwandfrei spielte, bei dem aber nach längerer Zeit die Klangqualität spürbar nachläßt, in der Werkstatt neu abgeglichen werden muß. Daß solche Wartungsmaßnahmen entfallen, ist als weiterer Vorteil zu betrachten, denn die Wartung eines Gerätes ist nicht nur für den Kunden unangenehm, sie kostet auch dessen Geld.

Figur 14 zeigt einen sogenannten Aktuator mit eingeschränktem mechanischen Fokusbereich.

Das Objektiv 20 mit einem Objektivschaft 21 wird von Blattfedern 24 in seiner Mittelstellung gehalten und zentriert. Permanentmagnete sind am Objektivschaft 21 enthalten, und im Rohr 23 ist eine eingebettete Spule 22 angedeutet. Solche bereits bekannte Aktuatoren sind aufwendig und teuer.

Figur 15 zeigt einen ähnlichen ebenfalls bekannten Aktuator mit einem zylindrischen Objektivschaft 21, mit einem Objektiv 20 und einem Rohr 23, in dem sich der Objektivschaft 21 frei bewegen kann. Nach oben und unten ist der Objektivschaft 21 mechanisch begrenzt durch Anschläge 26 bzw. 25 und gegen Verdrehen gesichert.

Der Nachteil eines solchen Systems ist, daß Reibung und mechanische Unsymmetrien das Objektiv 20 samt Objektivschaft 21 bei langsamen und kleinen Bewegungen schwer beherrschbar machen. Bewegt sich der Objektivschaft 21 mit dem Objektiv 20 nicht, so kann es weiter zu einer Verkantung in dem Rohr 23 kommen. Tritt nun ein durch einen Schlag des Aufzeichnungsträgers verursachtes Regelsignal an der Spule auf, so benötigt die Spule wesentlich mehr Energie, um den Objektivschaft 21 aus seinem verkanteten Zustand zu befreien als für die nötige Ausgleichs- und Fokusfolgebewegung erforderlich wäre. Die Folge davon ist ein Anwachsen des Regelsignals, weil der Objektivschaft 21 so lange keine Bewegung ausführt, bis die Energie groß genug ist, um das Losbrechmoment zu überwinden. Dadurch kann es zu Überschwingungen des Objektivschafts 21 samt Objektiv 20 kommen, die die Regelzeit beträchtlich verlängern.

Solche Überschwingungen des Objektivschaftes lassen sich dadurch vermeiden, daß dem Regelsignal ständig eine Wechselkomponente überlagert wird. Weil die Wechselkomponente den Objektivschaft dauernd in Bewegung hält, denn er schwingt um eine Mittellage, ist ein Verkanten ausgeschlossen. Durch die dauernde Hin- und Herbewegung des Objektivschaftes 21 im Rohr 23 tritt zwischen diesen beiden Teilen nur noch Gleitreibung und nicht mehr die größere Haftreibung auf. Deshalb bedarf es einer weit geringeren Kraft, um den schwingenden Objektivschaft 21 zu verschieben, als es bei ruhendem Objektivschaft 21 der Fall wäre. Allerdings läßt sich bei überlagerter Wechselkomponente nicht so genau fokussieren wie ohne Überlagerung.

**Patentansprüche**

1. Verfahren zum Fokussieren eines Lichtstrahls, der mittels eines optischen Systems, bestehend aus einer Lichtquelle und einem mittels eines Stellgliedes (SG) bewegbaren Objektivs auf einen optischen Aufzeichnungsträger fokussierbar ist, der den Lichtstrahl auf eine Anzahl von Photoelementen (A, B, C, D) reflektiert, aus deren Ausgangsspannungen durch Subtraktion und Addition der so ermittelten Differenzen eine erste Steuerspannung gewonnen wird, die über einen Regelverstärker (RV) dem Stellglied (SG) zuführbar ist, so daß ein Regelkreis gebildet wird, wobei eine zweite Steuerspannung ($U_s$) von einem Signalgenerator (SR) erzeugt wird, die von dem Signalgenerator (SR) verändert wird, bis der Lichtstrahl auf den Aufzeichnungsträger fokussiert ist, worauf der zu diesem Zeitpunkt angenommene Wert W der zweiten Steuerspannung ($U_s$) gehalten und als Vorspannung dem Stellglied (SG) zugeführt wird, **dadurch gekennzeichnet**, daß die Veränderung der zweiten Steuerspannung ($U_s$) bei offenem Regelkreis erfolgt, daß der Wert W der zweiten Steuerspannung ($U_s$) für verschiedene Typen von Aufzeichnungsträgern speicherbar ist und daß beim Fokussieren bei einem bestimmten Typ eines Aufzeichnungsträgers die zweite Steuerspannung vom für diesen Typ gespeicherten Wert W ausgehend verändert wird.

2. Verfahren nach Anspruch 1, **dadurch gekennzeichnet**, daß die Veränderung der zweiten Steuerspannung ($U_s$) bei wechselspannungsmäßig offenem, gleichspannungsmäßig jedoch geschlossenem Regelkreis erfolgt.

3. Verfahren nach Anspruch 1 oder 2, **dadurch gekennzeichnet**, daß die zweite Steuerspannung ($U_s$) durch Pulsmodulation verändert wird.

4. Verfahren nach Anspruch 3, **dadurch gekennzeichnet**, daß als Pulsmodulationsverfahren die Pulsbreitenmodulation vorgesehen ist.

5. Verfahren nach Anspruch 4, **dadurch gekennzeichnet**, daß die zweite Steuerspannung ($U_s$) sägezahnförmig ausgebildet ist.

6. Verfahren nach Anspruch 4, **dadurch gekennzeichnet**, daß die zweite Steuerspannung ($U_s$) dreieckförmig ausgebildet ist.

7. Verfahren nach Anspruch 1, 2, 3, 4, 5 oder 6, **dadurch gekennzeichnet**, daß der Regelspannung eine Wechselspannung überlagert wird.

8. Schaltungsanordnung zum Fokussieren eines Lichtstrahls, der mittels eines optischen Systems, bestehend aus einer Lichtquelle und einem mittels eines Stellgliedes (SG) bewegbaren Objektivs auf einen optischen Aufzeichnungsträger fokussierbar ist, der den Lichtstrahl auf eine Anzahl von Photoelementen (A, B, C, D) reflektiert, aus deren Ausgangsspannungen durch Subtraktion und Addition der so ermittelten Differenzen eine erste Steuerspannung gewonnen wird, die über einen Regelverstärker (RV) dem Stellglied (SG) zuführbar ist, so daß ein Regelkreis gebildet wird, wobei Mittel vorgesehen sind, um eine zweite Steuerspannung ($U_s$) von einem Signalgenerator (SR) zu erzeugen, die von dem Signalgenerator (SR) verändert wird, bis der Lichtstrahl auf den Aufzeichnungsträger fokussiert ist, worauf der zu diesem Zeitpunkt angenommene Wert W der zweiten Steuerspannung ($U_s$) gehalten und als Vorspannung dem Stellglied (SG) zugeführt wird, **dadurch gekennzeichnet**, daß Mittel vorgesehen sind derart, daß die Veränderung der zweiten Steuerspannung ($U_s$) bei offenem Regelkreis erfolgt, daß der Wert W der zweiten Steuerspannung ($U_s$) für verschiedene Typen von Aufzeichnungsträgern speicherbar ist und daß beim Fokussieren bei einem bestimmten Typ eines Aufzeichnungsträgers die zweite Steuerspannung vom für diesen Typ gespeicherten Wert W ausgehend verändert wird.

9. Schaltungsanordnung nach Anspruch 8, **dadurch gekennzeichnet**, daß Mittel vorgesehen sind derart, daß die Veränderung der zweiten Steuerspannung (U$_s$) bei wechselspannungsmäßig offenem, gleichspannungsmäßig jedoch geschlossenem Regelkreis erfolgt.

10. Schaltungsanordnung nach Anspruch 8, **dadurch gekennzeichnet**, daß der Ausgang einer Lichtempfangs- und Auswerteschaltung (O) mit dem Eingang eines Fokusdetektors (FD) und mit dem Eingang des Regelverstärkers (RV) verbunden ist, daß der Ausgang des Regelverstärkers (RV) mit dem einen Kontakt eines steuerbaren Schalters (S) verbunden ist, dessen anderer Kontakt mit dem einen Eingang einer Summationsstelle (SU) verbunden ist, daß der Ausgang des Fokusdetektors (FD) mit dem Steuereingang des steuerbaren Schalters (S) und mit dem Eingang des Signalgenerators (SR) verbunden ist, daß der Ausgang des Signalgenerators (SR) mit dem Eingang eines Digital-Analog-Wandlers (DA) verbunden ist, dessen Ausgang mit dem anderen Eingang der Summationsstelle (SU) verbunden ist, und daß der Ausgang der Summationsstelle (SU) mit dem Eingang des Stellgliedes (SG) verbunden ist.

11. Schaltungsanordnung nach Anspruch 8 **dadurch gekennzeichnet**, daß der Ausgang einer Lichtempfangs- und Auswerteschaltung (O) mit dem Eingang eines Fokusdetektors (FD) und mit dem einen Kontakt eines steuerbaren Schalters (S) verbunden ist, dessen anderer Kontakt mit dem einen Eingang einer Summationsstelle (SU) verbunden ist, daß der Ausgang des Fokusdetektors (FD) mit dem Steuereingang des steuerbaren Schalters (S) und mit dem Eingang des Signalgenerators (SR) verbunden ist, daß der Ausgang des Signalgenerators (SR) mit dem Eingang eines Digital-Analog-Wandlers (DA) verbunden ist, dessen Ausgang mit dem anderen Eingang der Summationsstelle (SU) verbunden ist, daß der Ausgang der Summationsstelle (SU) mit dem Eingang des Regelverstärkers (RV) verbunden ist und daß der Ausgang des Regelverstärkers (RV) mit dem Eingang des Stellgliedes (SG) verbunden ist.

12. Schaltungsanordnung nach Anspruch 9, **dadurch gekennzeichnet**, daß der Ausgang einer Lichtempfangs- und Auswerteschaltung (O) mit dem Eingang eines Fokusdetektors (FD) und mit dem einen Eingang einer Summationsstelle (SU) verbunden ist, deren anderer Eingang mit dem Ausgang eines Digital-Analog-Wandlers (DA) verbunden ist, daß der Ausgang des Fokusdetektors (FD) mit dem Eingang (E) einer Kontrolleinheit (K) verbunden ist, deren erster Ausgang (A1) mit dem Eingang des Digital-Analog-Wandlers (DA) und deren zweiter Ausgang (A2) mit dem Steuereingang einer Schalteinheit (SE) verbunden ist, daß der Ausgang der Summationsstelle (SU) mit dem Eingang der Wechselspannungsmäßig Schaltbaren Schalteinheit (SE) verbunden ist, deren Ausgang mit dem Eingang des Regelverstärkers (RV) verbunden ist und daß der Ausgang des Regelverstärkers (RV) mit dem Eingang des Stellgliedes (SG) verbunden ist.

13. Schaltungsanordnung nach Anspruch 12, **durch gekennzeichnet**, daß zwischen dem Regelverstärker (RV) und dem Stellglied (SG) ein steuerbarer Schalter (S) liegt, dessen Steuereingang mit einem dritten Ausgang (A3) der Kontrolleinheit (K) verbunden ist.

14. Schaltungsanordnung nach Anspruch 9, **dadurch gekennzeichnet**, daß der Ausgang einer Lichtempfangs- und Auswerteschaltung (O) mit dem einen Eingang einer Summationsstelle (SU) verbunden ist, deren anderer Eingang mit dem Ausgang eines Digital-Analog-Wandlers (DA) verbunden ist, daß der Eingang des Digital-Analog-Wandlers (DA) mit dem ersten Ausgang (A1) einer Kontrolleinheit (K) verbunden ist, deren zweiter Ausgang (A2) mit dem Steuereingang einer Wechselspannungsmäßig schaltbaren Schalteinheit (SE) und deren Eingang (E) mit dem Ausgang eines Fokusdetektors (FD) verbunden ist, daß der Ausgang der Summationsstelle (SU) mit dem Eingang des Fokusdetektors (FD) und mit dem Eingang der Schalteinheit (SE) verbunden ist, deren Ausgang mit dem Eingang des Regelverstärkers (RV) verbunden ist, und daß der Ausgang des Regelverstärkers (RV) mit dem Eingang des Stellgliedes (SG) verbunden ist.

15. Schaltungsanordnung nach Anspruch 8, **dadurch gekennzeichnet**, daß der Ausgang einer Lichtempfangs- und Auswerteschaltung (O) mit dem einen Eingang einer ersten Summationsstelle (SU) verbunden ist, deren anderer Eingang mit dem Ausgang eines ersten Digital-Analog-Wandlers (DA) verbunden ist, daß der Ausgang der ersten Summationsstelle (SU) mit dem Eingang eines Fokusdetektors (FD) und mit dem einen Kontakt eines steuerbaren Schalters (S) verbunden ist, daß der Ausgang des Fokusdetektors (FD) mit dem Eingang (E) einer Kontrolleinheit (K) verbunden ist, deren erster Ausgang (A1) mit dem Eingang des ersten Digital-Analog-Wandlers (DA), deren zweiter Ausgang (A2) mit dem Steuereingang des steuerbaren Schalters (S) und deren dritter Ausgang (A3) mit dem Eingang eines zweiten Digital-Analog-Wandlers (DA2) verbunden ist, daß der Ausgang des steuerbaren Schalters (S) mit dem einen Eingang einer zweiten Summationsstelle (SU2) verbunden ist, deren anderer Eingang mit dem Ausgang des zweiten Digital-Analog-Wandlers (DA2) verbunden ist, daß der Ausgang der zweiten Summationsstelle (SU2) mit dem Eingang des Regelverstärkers (RV) verbunden ist und daß der Ausgang des Regelverstärkers (RV) mit dem Eingang des Stellgliedes (SG) verbunden ist.

## Claims

1. A method of focusing a beam of light, which can be focused on to an optical recording medium with the aid of an optical system, comprising a light source and a lens movable with the aid of an adjusting element (SG), said recording medium reflecting the beam of light on to a number of photoelements (A,B,C,D), from the output voltages of which a first control voltage is obtained by subtraction and addition of the differences thus ascertained, said control voltage can be supplied via a control amplifier (RV) to the adjusting element (SG), so that a control circuit is formed, a second control voltage (U$_s$) being produced by a signal generator (SR), this being changed by the signal generator (SR) until the beam of light is focused on the recording medium, whereupon the value W of the second control voltage (U$_s$) accepted at this point in time is kept and supplied to the adjusting element (SG) as a bias **characterised in that** the change in the second control voltage (U$_s$) occurs when the control circuit is open, that the value W of the second control voltage (U$_s$) can be stored for different types of recording media and that when focusing with a certain type of a recording medium the second control voltage is changed starting from the value W stored for this type.

2. A method according to claim 1, **characterised in that** the change in the second control voltage (U$_s$) occurs when in terms of alternating voltage the control circuit is open, but in terms of direct voltage is closed.

3. A method according to claim 1 or 2, **characterised in that** the second control voltage (U$_s$) is changed by pulse modulation.

4. A method according to claim 3, **characterised in that** the pulse width modulation is provided as a method of pulse modulation.

5. A method according to claim 4, **characterised in that** the second control voltage (U$_s$) is sawtooth shaped.

6. A method according to claim 4, **characterised in that** the second control voltage (U$_s$) is triangular.

7. A method according to claims 1,2,3,4,5 or 6, **characterized in that** an alternating voltage is superimposed on the control voltage.

8. A circuit arrangement for focusing a light beam which can be focused on to an optical recording medium with the aid of an optical system, comprising a light source and a lens movable with the aid of an adjusting element (SG), said recording medium reflecting the beam of light on to a number of photoelements (A,B,C,D), from the output voltages of which a first control voltage is obtained by subtraction and addition of the differences thus ascertained, said control voltage can be supplied via a regulating amplifier (RV) to the adjusting element (SG), so that a control circuit is formed in which means are provided to produce a second control voltage (U$_s$) from a signal generator (SR), which second control voltage is changed by the signal generator (SR) until the beam of light is focused on to the recording medium, whereupon the value W of the second control voltage (U$_s$) accepted at this point in time is kept and supplied to the adjusting element (SG) as a bias, **characterised in that** means are provided such that the change in the second control voltage (U$_s$) occurs when the control circuit is open, that the value W of the second control voltage (U$_s$) can be stored for different types of recording media and that when focusing with a certain type of a recording medium the second control voltage is changed starting from the value W stored for this type.

9. A circuit arrangement according to claim 8, **characterised in that** means are provided such that the change in the second control voltage (U$_s$) occurs when in terms of alternating voltage the regulating circuit is open, but in terms of direct voltage is closed.

10. A circuit arrangement according to claim 8,

characterised in that the output of a light receiving and evaluation circuit (O) is connected to the input of a focus detector (FD) and to the input of the control amplifier (RV), that the output of the control amplifier (RV) is connected to one contact of a controllable switch (S), the other contact of which is connected to one input of a summation point (SU), that the output of the focus detector (FD) is connected to the control input of the controllable switch (S) and to the input of the signal generator (SR), that the output of the signal generator (SR) is connected to the input of a digital/analog converter (DA), its output being connected to the other input of the summation point (SU), and that the output of the summation point (SU) is connected to the input of the adjusting element (SG).

11. A circuit arrangement according to claim 8 characterised in that the output of a light receiving and evaluation circuit (O) is connected to the input of a focus detector (FD) and to one contact of a controllable switch (S), its other contact being connected to the one input of a summation point (SU), that the output of the focus detector (FD) is connected to the control input of the controllable switch (S) and to the input of the signal generator (SR), that the output of the signal generator (SR) is connected to the input of a digital/analog converter (DA), its output being connected to the other input of the summation point (SU), that the output of the summation point (SU) is connected to the input of the control amplifier (RV) and that the output of the control amplifier (RV) is connected to the input of the adjusting element (SG).

12. A circuit arrangement according to claim 9, characterised in that the output of a light receiving and evaluation circuit (O) is connected to the input of a focus detector (FD) and to the one input of a summation point (SU), its other input being connected to the output of a digital / analog converter (DA), that the output of the focus detector (FD) is connected to the input (E) of a control unit (K), the first output (A1) of which is connected to the input of the digital/analog converter (DA) and the second output (A2) of which is connected to the control input of a switching unit (SE), that the output of the summation point (SU) is connected to the input of the switching unit (SE) which is switchable in terms of alternating voltage, its output being connected to the input of the control amplifier (RV) and that the output of the control amplifier (RV) is connected to the input of the adjusting element (SG).

13. A circuit arrangement according to claim 12, characterised in that a controllable switch (S) lies between the regulating amplifier (RV) and the adjusting element (SG), its control input being connected to a third output (A3) of the checking unit (K).

14. A circuit arrangement according to claim 9, characterised in that the output of a light receiving and evaluation circuit (O) is connected to the one input of a summation point (SU), its other input being connected to the output of a digital/analog converter (DA), that the input of the digital/analog converter (DA) is connected to the first output (A1) of a control unit (K), its second output (A2) being connected to the control input of a switching unit (SE) which is switchable in terms of alternating voltage and of which the input (E) is connected to the output of a focus detector (FD),that the output of the summation point (SU) is connected to the input of the focus detector (FD) and to the input of the switching unit (SE), its output being connected to the input of the control amplifier (RV), and that the output of the control amplifier (RV) is connected to the input of the adjusting element (SG).

15. A circuit arrangement according to claim 8, characterised in that the output of a light receiving and evaluation circuit (O) is connected to the one input of a first summation point (SU), its other input being connected to the output of a first digital/analog converter (DA), that the output of the first summation point (SU) is connected to the input of a focus detector (FD) and to the one contact of a controllable switch (S), that the output of the focus detector (FD) is connected to the input (E) of a control unit (K), the first output (A1) of which is connected to the input of the first digital/analog converter (DA), its second output (A2) being connected to the control input of the controllable switch (S) and its third output (A3) being connected to the input of a second digital/ analog converter (DA2), that the output of the controllable switch (S) is connected to the one input of a second summation point (SU2), its other input being connected to the output of the second digital/analog converter (DA2), that the output of the second summation point (SU2) is connected to the input of the control amplifier (RV) and that the output of the control amplifier (RV) is connected to the input of the adjusting element (SG).

## Revendications

1. Procédé pour focaliser un faisceau lumineux qui peut être focalisé sur un support d'enregistrement au moyen d'un système optique constitué par une source de lumière et un objectif mobile à l'aide d'un composant de réglage (SG), support d'enregistrement qui reflète le faisceau lumineux sur un certain nombre de cellules photoélectriques (A, B, C, D), une première tension de commande étant obtenue à partir de leurs tensions de sortie par soustraction et addition des différences ainsi déterminées, première tension de commande qui peut être amenée au composant de réglage (SG) par un amplificateur de réglage (RV) de telle manière qu'il se forme une boucle d'asservissement, une seconde tension de commande ($U_s$) étant produite par un générateur de signal (SR) et étant modifiée par le générateur de signal jusqu'à ce que le faisceau lumineux soit focalisé sur le support d'enregistrement, ce après quoi la valeur W de la seconde tension de commande ($U_s$) à ce moment-là est maintenue et amenée au composant de réglage (SG) comme prétension, **caractérisé en ce** que la variation de la seconde tension de commande ($U_s$) est effectuée avec la boucle d'asservissement ouverte, que la valeur W de la seconde tension de commande ($U_s$) peut être mémorisée pour plusieurs types de supports d'enregistrements et que, pour la focalisation avec un certain type de support d'enregistrement, la seconde tension de commande est variée à partir de la valeur W mémorisée pour ce type.

2. Procédé selon la revendication 1, **caractérisé en ce** que la variation de la seconde tension de commande ($U_s$) est effectuée avec la boucle d'asservissement ouverte pour la tension alternative mais fermée pour la tension continue.

3. Procédé selon la revendication 1 ou 2, **caractérisé en ce** que la seconde tension de commande ($U_s$) est variée par modulation d'impulsions.

4. Procédé selon la revendication 3, **caractérisé en ce** que la modulation d'impulsions en durée est prévue comme procédé de modulation d'impulsions.

5. Procédé selon la revendication 4, **caractérisé en ce** que la seconde tension de commande ($U_s$) est formée en dent de scie.

6. Procédé selon la revendication 4, **caractérisé en ce** que la seconde tension de commande ($U_s$) est formée en delta.

7. Procédé selon la revendication 1, 2, 3, 4, 5 ou 6, **caractérisé en ce** qu'une tension alternative est superposée à la tension de réglage.

8. Montage pour focaliser un faisceau lumineux qui peut être focalisé sur un support d'enregistrement au moyen d'un système optique constitué par une source de lumière et un objectif mobile à l'aide d'un composant de réglage (SG), support d'enregistrement qui reflète le faisceau lumineux sur un certain nombre de cellules photoélectriques (A, B, C, D), une première tension de commande étant obtenue à partir de leurs tensions de sortie par soustraction et addition des différences ainsi déterminées, première tension de commande qui peut être amenée au composant de réglage (SG) par un amplificateur de réglage (RV) de telle manière qu'il se forme une boucle d'asservissement, des moyens étant prévus pour produire une seconde tension de commande ($U_s$) par un générateur de signal (SR) qui est modifiée par le générateur de signal (SR) jusqu'à ce que le faisceau lumineux soit focalisé sur le support d'enregistrement, ce après quoi la valeur W de la seconde tension de commande ($U_s$) à ce moment-là est maintenue et amenée au composant de réglage (SG) comme prétension, **caractérisé en ce** que des moyens sont prévus tels que la variation de la seconde tension de commande est effectuée avec la boucle d'asservissement ouverte, que la valeur W de la seconde tension de commande ($U_s$) peut être mémorisée pour plusieurs types de supports d'enregistrements et que, pour la focalisation avec un certain type de support d'enregistrement, la seconde tension de commande est variée à partir de la valeur W mémorisée pour ce type.

9. Montage selon la revendication 8, **caractérisé en ce** que des moyens sont prévus tels que la variation de la seconde tension de commande ($U_s$) est effectuée avec la boucle d'asservissement ouverte pour la tension alternative mais fermée pour la tension continue.

10. Montage selon la revendication 8, **caractérisé en ce** que la sortie d'un circuit de réception et de restitution de la lumière (O) est reliée à l'entrée d'un détecteur de foyer (FD) et à l'entrée de l'amplificateur de réglage (RV), que la sortie de l'amplificateur de réglage (RV) est reliée à l'un des contacts d'un commutateur qui peut être commandé (S) dont l'autre contact est relié à l'une des entrées d'un addeur (SU), que la sortie du détecteur de foyer (FD) est reliée à l'entrée de commande du commutateur qui peut être commandé (S) et à l'entrée du générateur de signal (SR), que la sortie du générateur de signal (SR) est reliée à l'entrée d'un convertisseur numérique-analogique (DA) dont la sortie est reliée à l'autre entrée d'un addeur (SU) et que la sortie de l'addeur (SU) est reliée à l'entrée du composant de réglage (SG).

11. Montage selon la revendication 8, **caractérisé en ce** que la sortie d'un circuit de réception et de restitution de la lumière (O) est reliée à l'entrée d'un détecteur de foyer (FD) et à l'un des contacts d'un commutateur qui peut être commandé (S) dont l'autre contact est relié à l'une des entrées d'un addeur (SU), que la sortie du détecteur de foyer (FD) est reliée à l'entrée de commande du commutateur qui peut être commandé (S) et à l'entrée du générateur de signal (SR), que la sortie du générateur de signal (SR) est reliée à l'entrée d'un convertisseur numérique-analogique (DA) dont la sortie est reliée à l'autre entrée de l'addeur (SU), que la sortie de l'addeur (SU) est reliée à l'entrée de l'amplificateur de réglage (RV) et que la sortie de l'amplificateur de réglage (RV) est reliée à l'entrée du composant de réglage (SG).

12. Montage selon la revendication 9, **caractérisé en ce** que la sortie d'un circuit de réception et de restitution de la lumière (O) est reliée à l'entrée d'un détecteur de foyer (FD) et à l'une des entrées d'un addeur (SU) dont l'autre entrée est reliée à la sortie d'un convertisseur numérique-analogique (DA), que la sortie du détecteur de foyer (FD) est reliée à l'entrée (E) d'une unité de contrôle (K) dont la première sortie (A1) est reliée à l'entrée du convertisseur numérique-analogique (DA) et dont la seconde sortie (A2) est reliée à l'entrée de commande d'une unité de commutation (SE), que la sortie de l'addeur (SU) est reliée à l'entrée de l'unité de commutation (SE) commutable sur le plan de la tension alternative dont la sortie est reliée à l'entrée de l'amplificateur de réglage (RV) et que la sortie de l'amplificateur de réglage (RV) est reliée à l'entrée du composant de réglage (SG).

13. Montage selon la revendication 12, **caractérisé en ce** qu'un commutateur qui peut être commandé (S) se trouve entre l'amplificateur de réglage (RV) et le composant de réglage (SG), commutateur dont l'entrée de commande est reliée à une troisième sortie (A3) de l'unité de contrôle (K).

14. Montage selon la revendication 9, **caractérisé en ce** que la sortie d'un circuit de réception et de restitution de la lumière (O) est reliée à l'une des entrées d'un addeur (SU) dont l'autre entrée est reliée à la sortie d'un convertisseur numérique-analogique (DA), que l'entrée du convertisseur numérique-analogique (DA) est reliée à la première sortie (A1) d'une unité de contrôle (K) dont la seconde sortie (A2) est reliée à l'entrée de commande d'une unité de commutation (SE) commutable sur le plan de la tension alternative et dont l'entrée (E) est reliée à la sortie d'un détecteur de foyer (FD), que la sortie de l'addeur (SU) est reliée à l'entrée du détecteur de foyer (FD) et à l'entrée de l'unité de commutation (SE) dont la sortie est reliée à l'entrée de l'amplificateur de réglage (RV) et que la sortie de l'amplificateur de réglage (RV) est reliée à l'etnrée du composant de réglage (SG).

15. Montage selon la revendication 8, **caractérisé en ce** que la sortie d'un circuit de réception et de restitution de la lumière (O) est reliée à l'une des entrées d'un premier addeur (SU) dont l'autre entrée est reliée à la sortie d'un premier convertisseur numérique-analogique (DA), que la sortie du premier addeur (SU) est reliée à l'entrée d'un détecteur de foyer (FD) et à l'un des contacts d'un commutateur qui peut être commandé (S), que la sortie du détecteur de foyer (FD) est reliée à l'entrée (E) d'une unité de contrôle (K) dont la première sortie (A1) est reliée à l'entrée du premier convertisseur numérique-analogique (DA), dont la seconde sortie (A2) est reliée à l'entrée de commande du commutateur qui peut être commandé (S) et dont la troisième sortie (A3) est reliée à l'entrée d'un second convertisseur numérique-analogique (DA2), que la sortie du commutateur qui peut être commuté (S) est reliée à l'une des entrées d'un second addeur (SU2) dont l'autre entrée est reliée à la sortie du second convertisseur numérique-analogique (DA2), que la sortie du second addeur (SU2) est reliée à l'entrée de l'amplificateur de réglage (RV) et que la sortie de l'amplificateur de réglage (RV) est reliée à l'entrée du composant de réglage (SG).

Fig.1

Fig.2

Fig. 3

Fig. 4

Fig.5

Fig.6

Fig. 7

Fig. 8

Fig. 9

Fig. 10

*Fig. 11*

Fig. 12

21

Fig.13

Fig.14    St. d. T.

Fig.15    St. d. T.